(19)

Europäisches
Patentamt
European
Patent Office
Office européen
des brevets

(11) **EP 4 350 358 A1**

(12) **EUROPEAN PATENT APPLICATION**
published in accordance with Art. 153(4) EPC

(43) Date of publication:
**10.04.2024 Bulletin 2024/15**

(21) Application number: **22815797.0**

(22) Date of filing: **10.05.2022**

(51) International Patent Classification (IPC):
**G01N 35/10** (2006.01)

(52) Cooperative Patent Classification (CPC):
**G01N 35/10**

(86) International application number:
**PCT/JP2022/019855**

(87) International publication number:
**WO 2022/255042 (08.12.2022 Gazette 2022/49)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **31.05.2021 JP 2021091364**

(71) Applicant: **HITACHI HIGH-TECH CORPORATION
Tokyo 105-6409 (JP)**

(72) Inventors:
• **MINAMI Noritaka**
  **Tokyo 105-6409 (JP)**
• **SAKATA Kenshiro**
  **Tokyo 105-6409 (JP)**
• **TAKAHASHI Takuya**
  **Tokyo 105-6409 (JP)**
• **KABE Yoshihiro**
  **Tokyo 105-6409 (JP)**

(74) Representative: **Strehl Schübel-Hopf & Partner
Maximilianstrasse 54
80538 München (DE)**

(54) **AUTOMATIC ANALYSIS DEVICE**

(57) [Problem] An object of the invention is to provide an automatic analyzer in which an adjustment accuracy of a cleaning liquid amount is improved by detecting a change in a cleaning water amount with high sensitivity.

[Solution] The automatic analyzer according to the invention includes a dispensing mechanism including a dispensing probe configured to dispense a sample or a reagent into a reaction container, a cleaning nozzle configured to discharge a cleaning liquid to the dispensing probe, and a control unit configured to control the dispensing mechanism. A height of the cleaning liquid discharged from the cleaning nozzle is detected at plural positions at which horizontal distances from the cleaning nozzle are different, so as to determine a discharging state of the cleaning liquid, and at least one of the plural positions is farther from the cleaning nozzle than a cleaning position of the dispensing probe.

FIG. 4

(a) FIRST (UPSTREAM SIDE) HEIGHT DETECTING POSITION

(b) SECOND (DOWNSTREAM SIDE) HEIGHT DETECTING POSITION

EP 4 350 358 A1

**Description**

Technical Field

The present invention relates to an automatic analyzer.

Background Art

An automatic analyzer performs qualitative and quantitative analysis on a specific component contained in a biological sample such as blood or urine. In general operations, a sample is dispensed from a sample container to a reaction container by a dispensing probe, then a reagent is dispensed from a reagent container to the reaction container by the dispensing probe and agitation is performed, then the sample and the reagent are caused to react with each other for a certain period of time, and concentration calculation of a target item is performed based on information on absorbance, an amount of luminescence, and the like obtained from a reaction solution. In such an automatic analyzer, the probe for aspirating a sample and a reagent is required to be cleaned at an appropriate timing in order to perform accurate measurement.

However, when performance of a pump configured to supply a cleaning liquid for cleaning the probe degrades due to aging deterioration or a flow channel from the pump to a discharge port of the cleaning liquid is clogged, a liquid amount of the cleaning liquid changes. When the cleaning liquid amount is small, for example, there is a possibility that the probe cannot be sufficiently cleaned and carry-over or the like occurs. On the other hand, when the cleaning liquid amount is large, for example, there is a possibility that water droplets remain at a tip end of the probe. In order to cope with such a change in the cleaning liquid amount, in general, an operator performs maintenance to adjust the cleaning liquid amount periodically. However, the manual adjustment is time-consuming and a variation occurs.

Here, for example, PTL 1 is known as a technique for checking a cleaning liquid amount. PTL 1 discloses that "a discharge state of a cleaning liquid flow is determined using a liquid level detection function of a nozzle and a pressure fluctuation detection function in a nozzle pipe" (Abstract).

Citation List

Patent Literature

PTL 1: WO 2010/016506

Summary of Invention

Technical Problem

In the technique disclosed in PTL 1, a change in a liquid flow state is detected only at a position at which a dispensing probe is usually cleaned. In cleaning of discharging a cleaning liquid obliquely from a cleaning nozzle, since a change in a cleaning liquid flow is small in the vicinity of the cleaning nozzle, a variation in a cleaning range of each time is small, but it is difficult to detect a liquid flow change.

The invention has been made in view of the above problems, and an object of the invention is to provide an automatic analyzer in which an adjustment accuracy of a cleaning liquid amount is improved by detecting a change in a cleaning water amount with high sensitivity.

Solution to Problem

In order to solve the above problems, an automatic analyzer according to the invention includes: a dispensing mechanism including a dispensing probe configured to dispense a sample or a reagent into a reaction container; a cleaning nozzle configured to discharge a cleaning liquid to the dispensing probe; and a control unit configured to control the dispensing mechanism. A height of the cleaning liquid discharged from the cleaning nozzle is detected at plural positions at which horizontal distances from the cleaning nozzle are different, so as to determine a discharging state of the cleaning liquid, and at least one of the plural positions is farther from the cleaning nozzle than a cleaning position of the dispensing probe.

Advantageous Effects of Invention

According to the invention, it is possible to provide an automatic analyzer in which an adjustment accuracy of a cleaning liquid amount is improved by detecting a change in a cleaning water amount with high sensitivity.

Brief Description of Drawings

[Fig. 1] Fig. 1 is a schematic configuration diagram of an automatic analyzer of the present embodiment.
[Fig. 2] Fig. 2 is a diagram showing a configuration of a sample dispensing mechanism related to a first embodiment.
[Fig. 3] Fig. 3 is a configuration example of a cleaning liquid amount adjustment unit of a sample dispensing probe.
[Fig. 4] Fig. 4 is a diagram showing examples of a lowered position of the sample dispensing probe, in which (a) is a diagram showing a state of detecting a height of a cleaning liquid at a first height detection position, and (b) is a diagram showing a state of detecting a height of the cleaning liquid at a second height detection position.
[Fig. 5] Fig. 5 is a diagram showing a configuration example of a control block for probe cleaning and probe cleaning liquid amount adjustment.
[Fig. 6] Fig. 6 is a flowchart showing a cleaning liquid discharge state determination and adjustment method in the first embodiment.
[Fig. 7] Fig. 7 is a diagram showing a cleaning liquid height detection position in a second embodiment.

Description of Embodiments

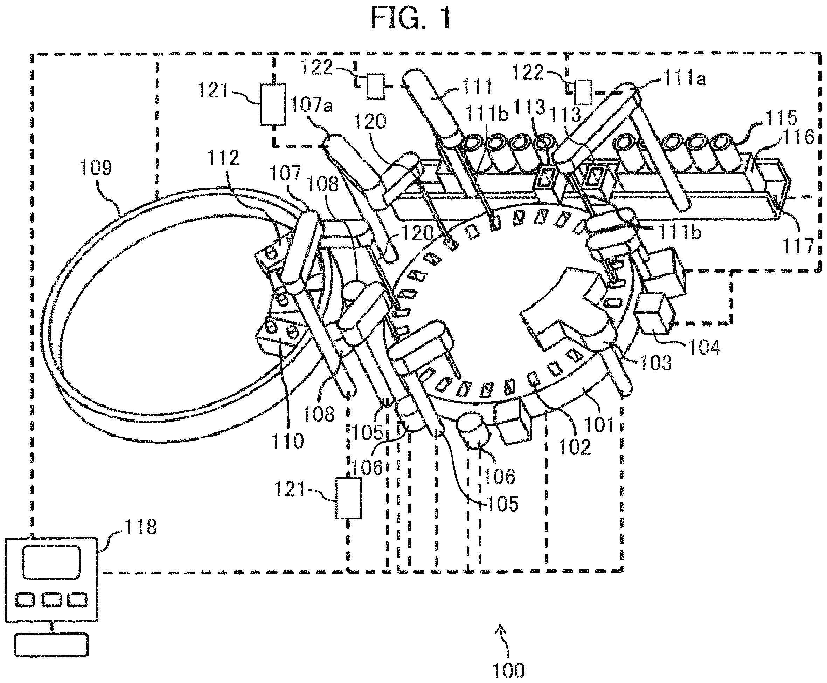

An embodiment of the invention will be described in detail with reference to the drawings. Fig. 1 is a schematic configuration diagram of an automatic analyzer of the present embodiment. An automatic analyzer 100 is an analyzer for performing component analysis by measuring a reaction solution subjected to a chemical reaction in a reaction container 102. The automatic analyzer 100 mainly includes a reaction disk 101, a cleaning mechanism 103, a spectral photometer 104, an agitation mechanism 105, a cleaning tank 106, a first reagent dispensing mechanism 107, a second reagent dispensing mechanism 107a, a cleaning tank 108, a reagent disk 109, a first sample dispensing mechanism 111, a second sample dispensing mechanism 111a, a cleaning tank 113, a sample transport mechanism 117, and a controller 118. The first reagent dispensing mechanism 107, the second reagent dispensing mechanism 107a, the first sample dispensing mechanism 111, and the second sample dispensing mechanism 111a have a liquid level detection function.

Reaction containers 102 are circumferentially disposed on the reaction disk 101. The reaction container 102 is a container for accommodating a liquid mixture obtained by mixing a sample and a reagent, and plural reaction containers 102 are arranged on the reaction disk 101. The sample transport mechanism 117 configured to transport a sample rack 116 on which a sample container 115 is placed is disposed near the reaction disk 101.

The first sample dispensing mechanism 111 and the second sample dispensing mechanism 111a capable of rotating and vertically moving are disposed between the reaction disk 101 and the sample transport mechanism 117, and each include a sample dispensing probe 111b. A sample syringe 122 is connected to the corresponding sample dispensing probe 111b. The sample dispensing probe 111b horizontally moves while drawing a circular arc around a rotation axis, and vertically moves to dispense a sample from the sample container 115 to the reaction container 102.

The reagent disk 109 is a storage container in which a reagent bottle 110 containing a reagent, a detergent bottle 112, and the like can be placed in plurality on a circumference thereof. The reagent disk 109 is kept cold.

The first reagent dispensing mechanism 107 and the second reagent dispensing mechanism 107a capable of rotating and vertically moving are provided between the reaction disk 101 and the reagent disk 109, and each include a reagent dispensing probe 120. The reagent dispensing probe 120 is vertically and horizontally moved by the first reagent dispensing mechanism 107 or the second reagent dispensing mechanism 107a. A reagent syringe 121 is connected to the corresponding reagent dispensing probe 120. A reagent, a detergent, a diluting liquid, a pretreatment reagent, and the like aspirated from the reagent bottle 110, the detergent bottle 112, a diluting liquid bottle, a pretreatment reagent bottle, and the like are dispensed into the reaction container 102 by the reagent syringe 121 through the reagent dispensing probe 120.

Around the reaction disk 101, the cleaning mechanism 103 for cleaning an inside of the reaction container 102, the spectral photometer 104 for measuring absorbance of light passing through the liquid mixture in the reaction container 102, the agitation mechanism 105 for mixing the sample and the reagent dispensed into the reaction container 102, and the like are arranged.

The cleaning tank 108 for the reagent dispensing probe 120 is disposed in operating ranges of the first reagent dispensing mechanism 107 and the second reagent dispensing mechanism 107a, the cleaning tank 113 for the sample dispensing probe 111b is disposed in operating ranges of the first sample dispensing mechanism 111 and the second sample dispensing mechanism 111a, and the cleaning tank 106 for the agitation mechanism 105 is disposed in an operating range of the agitation mechanism 105.

Each mechanism is connected to the controller 118, and an operation thereof is controlled by the controller 118. The controller 118, which is a control unit, is implemented by a computer or the like, controls the operations of the above-described mechanisms in the automatic analyzer, and performs calculation processing for obtaining a concentration of a predetermined component in a liquid sample such as blood or urine.

Analysis processing for an examination sample performed by the automatic analyzer 100 as described above is executed according to the following order. First, a sample in the sample container 115 placed on the sample rack 116 transported to the vicinity of the reaction disk 101 by the sample transport mechanism 117 is dispensed by the sample dispensing probe 111b of the first sample dispensing mechanism 111 and the second sample dispensing mechanism 111a into the reaction container 102 on the reaction disk 101. Next, a reagent used for the analysis is dispensed from the reagent bottle 110 on the reagent disk 109 into the reaction container 102, into which the sample is dispensed previously, by the first reagent dispensing mechanism 107 or the second reagent dispensing mechanism 107a. Subsequently, the agitation mechanism 105 agitates a liquid mixture of the sample and the reagent in the reaction container 102.

Thereafter, light generated from a light source is transmitted through the reaction container 102 containing the liquid mixture, and a luminous intensity of the transmitted light is measured by the spectral photometer 104. The luminous intensity measured by the spectral photometer 104 is transmitted to the controller 118 via an A/D converter and an interface. Then, calculation is performed by the controller 118, a concentration of a predetermined component in a liquid sample such as blood or urine is obtained, and a result thereof is displayed on a display unit (not shown) or the like. An automatic analyzer for obtaining a concentration of a predetermined component by using the spectral photometer 104 is described as an example. Alternatively, in a technique disclosed in an embodiment described later, an automatic immunology analyzer or an automatic coagulation analyzer that measures a sample by using another photometer may be used.

First Embodiment

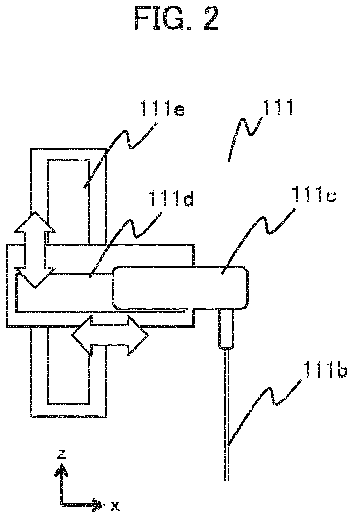

Here, a configuration of a sample dispensing mechanism related to a first embodiment will be described with reference to Fig. 2. Fig. 2 shows a configuration of the first sample dispensing mechanism 111, and the second sample dispensing mechanism 111a has the same configuration. As shown in Fig. 2, the sample dispensing mechanism includes a sample dispensing arm 111c including the sample dispensing probe 111b at a tip end thereof, a horizontal movement mechanism 111d configured to move the sample dispensing arm 111c in a horizontal direction (x direction), a vertical movement mechanism 111e configured to move the sample dispensing arm 111c in a vertical direction (z direction), and a rotation movement mechanism (not shown) configured to rotate the sample dispensing arm 111c. The sample dispensing mechanism moves, by using the movement mechanisms, the sample dispensing probe 111b to an aspirating position at which the sample is aspirated from the sample container 115, a discharging position at which the aspirated sample is discharged into the reaction container 102, and a cleaning position at which a tip end of the sample dispensing probe 111b is cleaned in the cleaning tank 113. Further, the sample dispensing mechanism lowers the sample dispensing probe 111b in accordance with heights of the sample container 115, the reaction container 102, and the cleaning tank 113 at the aspirating position, the discharging position, and the cleaning position.

In this embodiment, the cleaning of the sample dispensing probe 111b is described as an example, and the same applies to the reagent dispensing probe. The same also applies to a device that dispenses a sample and a reagent with one probe.

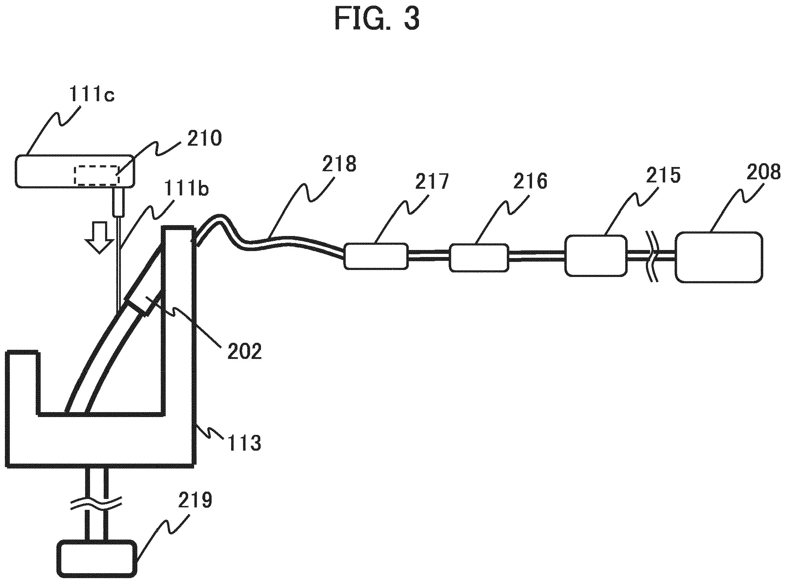

Fig. 3 is a diagram showing a configuration example of a cleaning liquid amount adjustment unit of the sample dispensing probe 111b. As shown in Fig. 3, the cleaning liquid amount adjustment unit includes a cleaning liquid supply pump 208 configured to supply a cleaning liquid from a pure water facility (not shown), an adjustment valve 215 capable of changing an opening and closing state by a control current, a solenoid valve 216 configured to turn on/off liquid feeding by opening and closing control, an adjustment valve 217 capable of adjusting a flow rate by an opening/closing operation (turning a screw of the valve manually), a cleaning nozzle 202 configured to discharge the cleaning liquid, a waste liquid tank 219 configured to store a waste liquid discharged from the cleaning tank 113, and a flow channel 218 connecting the components. A liquid level detector 210 (for example, a capacitance sensor) is mounted in the sample dispensing arm 111c of the sample dispensing mechanism.

In the cleaning of the sample dispensing probe 111b, the cleaning liquid fed from the cleaning liquid supply pump 208 by opening the solenoid valve 216 is discharged from the cleaning nozzle 202, and a liquid flow from the cleaning nozzle 202 comes into contact with an outer surface of the sample dispensing probe 111b, whereby dirt adhering to the outer surface of the sample dispensing probe 111b is removed.

In this embodiment, an example is illustrated in which a cleaning liquid amount from one cleaning nozzle 202 is adjusted by one adjustment valve 215. Alternatively, liquid amount adjustment of two or more cleaning nozzles may be performed by one adjustment valve 215. In the case of performing the liquid adjustment from plural cleaning nozzles, it is preferable that flow channel configurations from the cleaning liquid supply pump 208 to the cleaning nozzle are made the same, or that adjustment valves are provided in respective flow channels to perform adjustment in advance such that liquid amounts discharged from the respective cleaning nozzles are the same.

Since a discharge port at a tip end of the cleaning nozzle 202 is open, immediately after the start of discharge of the cleaning liquid, air may enter the cleaning nozzle 202 side of the flow channel 218, and water may splash. Therefore, in order to avoid erroneous detection of the liquid level detector 210, it is preferable to start the lowering of the sample dispensing probe 111b after the discharge of the cleaning liquid from the cleaning nozzle 202 is started.

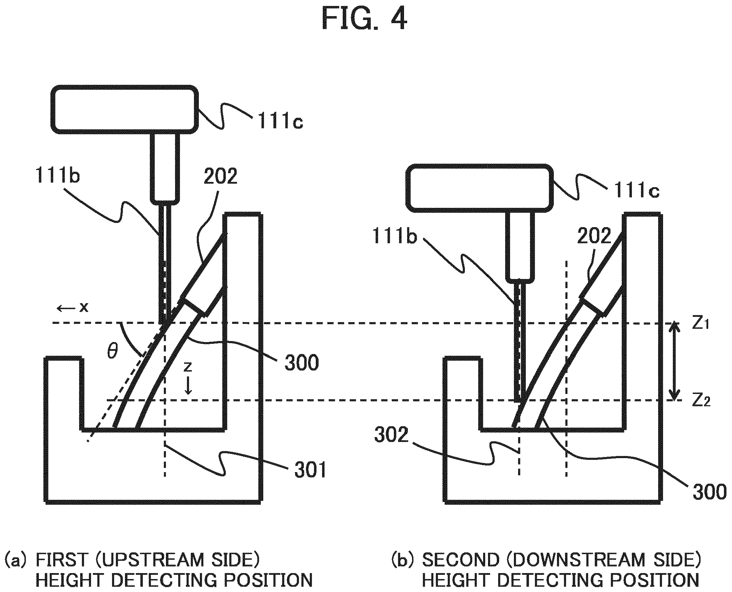

Fig. 4 is a diagram showing an example of a lowered position of the sample dispensing probe 111b in the first example. (a) in Fig. 4 shows a state where the sample dispensing probe 111b is lowered to a first height detection position 301 on an upstream side of a cleaning liquid flow (a position close to the cleaning nozzle) and the cleaning liquid is detected, and (b) in Fig. 4 illustrates a state where the sample dispensing probe 111b is lowered to a second height detection position 302 on a downstream side of the cleaning liquid flow (a position far from the cleaning nozzle) and the cleaning liquid is detected.

As shown in Fig. 4, during cleaning liquid discharge state determination, the control unit first lowers the sample dispensing probe 111b to the first height detection position 301 to detect a height of a cleaning liquid flow 300. Next, the control unit moves a horizontal position of the sample dispensing probe 111b to the second height detection position 302, and then lowers the sample dispensing probe 111b to detect the height of the cleaning liquid flow 300. The control unit determines a discharge state of the cleaning liquid based on height detection results.

Here, regarding the cleaning liquid flow 300 obliquely discharged from the cleaning nozzle 202, on the upstream side close to the cleaning nozzle 202, a change in an upper end position is small, and a difference between a normal discharge state and a discharge state in a small liquid amount is small. However, on the downstream side far from the cleaning nozzle 202, the change in the upper end position of the cleaning liquid flow 300 is large due to the influence of gravity, and the difference between the normal discharge state and the discharge state in a small liquid amount is large. Therefore, in this embodiment, at least one of the height detection positions, specifically the second height detection position, is located downstream of the cleaning position of the sample dispensing probe 111b (far from the cleaning nozzle 202). Accordingly, it is possible to easily detect a change in the cleaning liquid amount, and the detection sensitivity is improved, so that the discharge state of the cleaning liquid can be determined accurately.

However, when the discharge state of the cleaning liquid is determined based on only the height change detected at the second height detection position 302 on the downstream side, there is a possibility that erroneous determination occurs during maintenance in a case where a positional relationship between the cleaning nozzle 202 and the sample dispensing probe 111b is changed. For example, when the sample dispensing probe 111b, the solenoid valve 216, or the like is replaced or the cleaning tank 113 is removed, there is a possibility that a detection height at the second height detection position 302 decreases even if the cleaning liquid amount does not decrease. Therefore, the control unit in this embodiment determines the discharge state of the cleaning liquid also by using the height of the cleaning liquid flow 300 at the first height position on the upstream side, thereby preventing the erroneous determination. Specifically, the control unit calculates a difference (Z1 - Z2) between the upper end position (height Z1) of the cleaning liquid flow 300 detected at the first height detection position 301 and the upper end position (height Z2) of the cleaning liquid flow 300 detected at the second height detection position 302, and, when the difference is equal to or greater than a reference value, determines that the cleaning liquid amount is decreased.

A specific method of setting the reference value will be described below. For example, when a nozzle angle is defined as $\theta$, a flow rate of the cleaning liquid is defined as $v$, the gravitational acceleration is defined as $g$, and a horizontal distance between the first height detection position 301 and the second height detection position 302 is defined as $x'$, the reference value can be expressed by the following (expression 1).

[Math. 1]

$$\frac{25}{49} g \frac{x'^2}{v^2 cos^2 \theta} \quad \text{(Expression 1)}$$

(Expression 1) shows a decrease in the height of the cleaning liquid detected at the second height detection position 302 when the flow rate of the cleaning liquid flow 300 decreases by 30%. This is because when the flow rate decreases by 30%, there is a possibility that the cleaning effect for the dispensing probe cannot be ensured and carry-over occurs.

When the horizontal distance $x'$ between the two height detection positions is too short, an accuracy of determining the discharge state of the cleaning liquid is lowered. Therefore, when an error caused by liquid flow fluctuation, a liquid level detection error, a difference in liquid property, and the like is defined as F, and a safety factor is defined as S, the discharge state can be reliably determined by determining the horizontal distance $x'$ so as to satisfy the following (expression 2).

[Math. 2]

$$\frac{25}{49}g\frac{x'^2}{v^2cos^2\theta} > S * F \qquad \text{(Expression 2)}$$

When a range of the error F is large and the detection accuracy is difficult to ensure, a liquid level detection signal may be subjected to time averaging processing. However, a method of determining the horizontal distance x' is not limited thereto. For example, according to experiments conducted by the inventors, it has been found that a certain accuracy can be obtained when the horizontal distance x' is 1 mm or more, and thus the horizontal distance x' may be set to a predetermined value of 1 mm or more (for example, 2 mm).

Further, in this embodiment, the first height detection position 301 coincides with the cleaning position of the sample dispensing probe 111b. Therefore, there is no need to separately provide a data table related to a movement sequence to the first height detection position 301 of the sample dispensing probe 111b and there is no need to separately perform position adjustment work for the first height detection position (cleaning position subjected to position adjustment is sufficiently used), and thus workability is greatly improved.

Here, a shape of the liquid flow tends to become unstable toward the downstream side of the cleaning liquid flow 300, and splashes (scattering) are likely to occur. Therefore, a variation in a lowering distance (detection distance) of the sample dispensing probe 111b may increase. Therefore, the control unit in this embedment sets a speed at which the sample dispensing probe 111b is lowered during the cleaning liquid discharge state determination to be smaller than a speed at which the sample dispensing probe 111b is lowered during cleaning. In this way, by making the lowering speed of the sample dispensing probe 111b smaller than that during the cleaning, it is possible to reduce erroneous detection of a detection signal of contact with the cleaning liquid by the liquid level detector 210, and the variation in the detection position is prevented. A direction of the cleaning liquid discharged from the cleaning nozzle 202 is not necessarily the same as the direction in Fig. 4 since the liquid flow draws a parabola due to gravity even when the cleaning liquid is discharged obliquely upward from below.

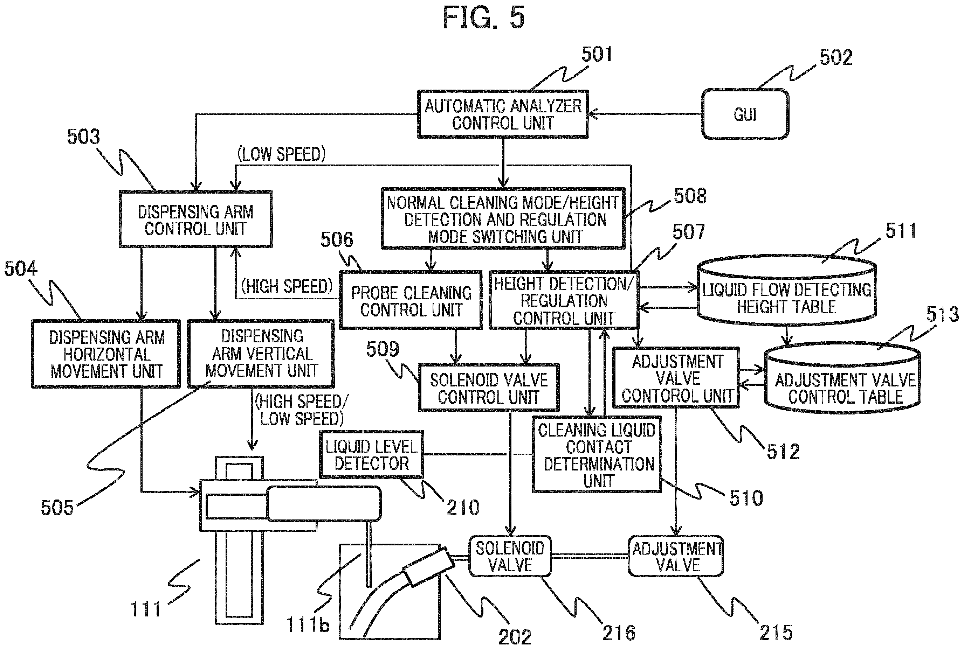

Fig. 5 is a diagram showing a configuration example of a control block for probe cleaning and probe cleaning liquid amount adjustment. An automatic analyzer control unit 501 is a central processing unit for controlling the entire analyzer, and receives a command such as an examination instruction from a user via a GUI 502. The dispensing mechanism determines the position of the dispensing probe according to an instruction from a dispensing arm control unit 503 to a dispensing arm horizontal moving unit 504 and a dispensing arm vertical moving unit 505.

In an operation during the analysis, cleaning processing is performed by moving the dispensing probe to the cleaning position in accordance with an instruction from a probe cleaning control unit 506. In an operation during the cleaning liquid discharge state determination and adjustment, height detection processing of the cleaning liquid is performed by moving the dispensing probe to the first height detection position 301 (the same as the cleaning position in this embodiment) and the second height detection position 302 in accordance with an instruction from a height detection and adjustment control unit 507. Since it is necessary to perform processing at a high speed during the analysis, the dispensing arm vertical moving unit 505 switches the speed so as to perform high speed movement during the analysis, and perform low speed movement during the cleaning liquid discharge state determination and adjustment. The switching between the analysis and the cleaning liquid discharge state determination and adjustment is performed by a normal cleaning mode/height detection and adjustment mode switching unit 508.

The opening and closing of the solenoid valve 216 for discharging the cleaning liquid is performed by a solenoid valve control unit 509, and the cleaning liquid is discharged at any time during the probe cleaning and during the cleaning liquid discharge state determination and adjustment. As described above, during the discharge state determination, the dispensing probe is lowered at a speed smaller than that during the cleaning, and the contact with the cleaning liquid is detected by the liquid level detector 210. The detection signal is stored in a liquid flow detection height table 511 via a cleaning liquid contact determination unit 510 (processing contents thereof will be described later) and the height detection and adjustment control unit 507. Information on cleaning liquid heights detected at the first height detection position 301 and the second height detection position 302 when the cleaning liquid having a reference water amount (reference flow rate) is discharged may be stored in the liquid flow detection height table in advance, and may be used for the determination of a low liquid amount during the cleaning liquid discharge state determination.

The height detection and adjustment control unit 507 determines control necessity and a control amount of the adjustment valve 215 based on the information stored in the liquid flow detection height table 511. An opening and closing state of the adjustment valve 215 is controlled by changing control output from an adjustment valve control unit 512. Control output during control over the adjustment valve 215 and information on a liquid flow height measured at this time are managed by an adjustment valve control table 513, and are referenced during next and subsequent control over the adjustment valve 215, whereby the cleaning liquid amount can be set to a target state by a smaller number of times of operations.

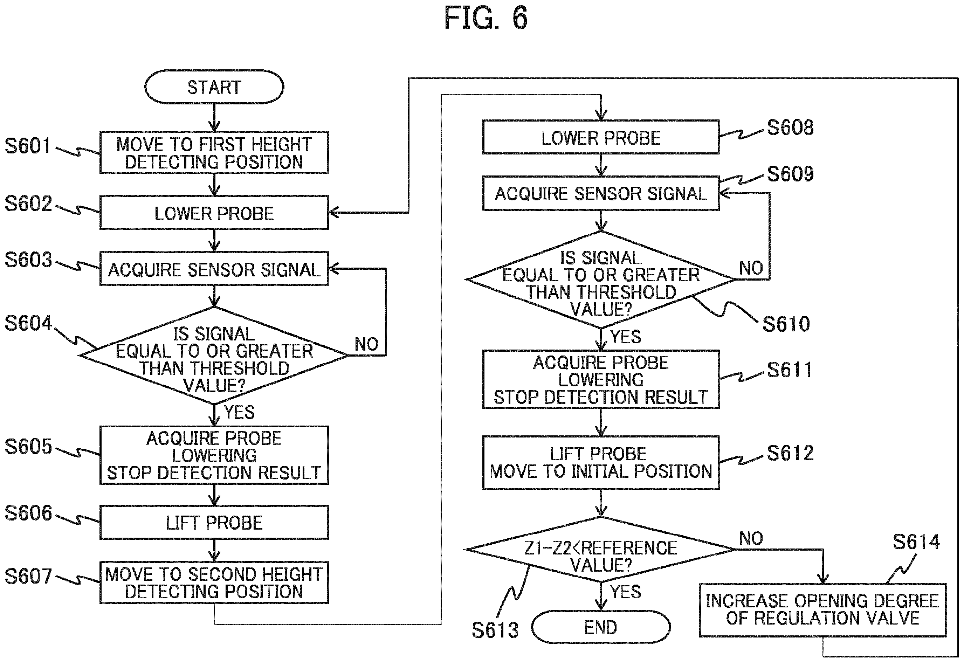

Fig. 6 is a flowchart showing operations of the cleaning liquid amount adjustment unit during the cleaning liquid discharge state determination. First, the dispensing probe is moved to the first height detection position 301 (step S601).

Next, the discharge of the cleaning liquid is started by an opening operation of the solenoid valve 216. Thereafter, the dispensing probe is lowered (step S602). During the lowering, a sensor signal is acquired (step S603), and it is determined whether a signal value thereof is equal to or greater than a liquid detection threshold (step S604). At this time, the lowering speed of the dispensing probe is smaller than a lowering operation of the dispensing probe in a cleaning operation during the analysis. By lowering at a low speed, it is possible to prevent erroneous detection of the detection signal of contact with the cleaning liquid by the liquid level detector 210, and to reduce the variation in detection of the upper end position of the cleaning liquid. The lowering operation of the dispensing probe is performed until a liquid level detection signal is detected, and after the liquid level detection signal is detected, a detection height (Z1) of the cleaning liquid flow is recorded in the liquid flow detection height table 511 (step S605). Then, the solenoid valve 216 is closed, and the dispensing probe is lifted (step S606). After the dispensing probe is moved to the second height detection position 302 (step S607), the same flow as that described above is executed (steps S608 to S612) .

Thereafter, the control unit determines whether a difference between the cleaning liquid height Z1 detected at the first height detection position 301 and the cleaning liquid height Z2 detected at the second height detection position 302 is less than a reference value (S613). When the difference is equal to or greater than the reference value, the control unit determines that adjustment (increase) of the liquid amount is necessary, and increases an opening degree of the adjustment valve 215 (S614).

Second Embodiment

In a sample dispensing mechanism according to a second embodiment, a dispensing arm horizontal moving unit does not have a degree of freedom in an X direction (radial direction) and only has a degree of freedom in an θ direction (rotation direction). However, even in an automatic analyzer including such a sample dispensing mechanism, height detection of a cleaning liquid is possible at two positions having different horizontal distances from a cleaning nozzle.

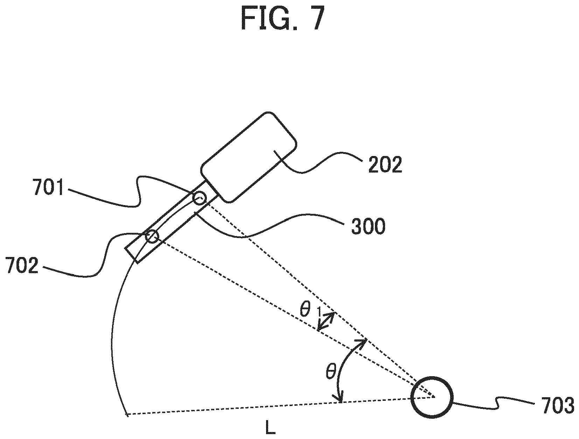

Fig. 7 is a diagram showing a positional relationship between the cleaning nozzle and a dispensing probe from directly above. As shown in Fig. 7, in the sample dispensing mechanism of this embodiment, an arm has a horizontal length L, and can rotate within a range of an angle θ around a rotation axis 703 (dispensing arm rotation center axis) in a vertical direction. A first height detection position 701, which is a cleaning position of the dispensing probe, and a second height detection position 702, which is obtained by rotating the dispensing probe by a constant angle (θ1) from the first height detection position 701, are present on vertical projection of a cleaning liquid flow discharged from the cleaning nozzle 202. By determining a height detection position in this way, even in a case of a sample dispensing mechanism in which movement in a horizontal direction is one axis (only in the θ direction), height detection of the cleaning liquid can be performed at two places, that is, one place close to the cleaning nozzle 202 and one place far from the cleaning nozzle 202. When the length L of the arm is sufficiently long, a circular-arc trajectory of the dispensing probe can be approximated to a straight trajectory, and thus the height detection can be performed at plural positions of three or more. When the height detection positions are set at three positions, a cleaning liquid discharge state determination accuracy is further improved.

The invention is not limited to the embodiments described above, and various modifications can be made. For example, in the first and second embodiments described above, the liquid flow height is detected by lowering the dispensing probe and bringing the dispensing probe into contact with a liquid level. Alternatively, a method of detecting the liquid flow height by bringing the dispensing probe close to the discharged cleaning liquid from the side and bringing the dispensing probe into contact with the discharged cleaning liquid may be adopted. In the first and second embodiments, the liquid level detector 210 is used in detecting the cleaning liquid amount, but the invention is not limited thereto as long as presence or absence of the cleaning liquid can be detected. For example, the cleaning liquid can be detected using a pressure sensor connected to a flow channel of the dispensing probe. Further, in the first and second embodiments, the detection of the liquid level height may be performed plural times at the same height detection position, the detection results may be averaged, or an outlier (a value having the largest difference from the average value among plural pieces of data) and the like may be removed to reduce the variation.

The embodiments and the modifications described above are examples for easy understanding of the invention, and the invention is not necessarily limited to those including all the configurations described above. Further, a part of a configuration of one embodiment may be replaced with a configuration of another embodiment, and the configuration of the other embodiment may be added to the configuration of the one embodiment. A part of a configuration of each embodiment may be added, deleted, or replaced with another configuration.

Reference Signs List

100:    automatic analyzer

101:    reaction disk
102:    reaction container
103:    cleaning mechanism
104:    spectral photometer
105:    agitation mechanism
106:    cleaning tank
107:    first reagent dispensing mechanism
107a:   second reagent dispensing mechanism
108:    cleaning tank (for reagent dispensing mechanism)
109:    reagent disk
110:    reagent bottle
111:    first sample dispensing mechanism
111a:   second sample dispensing mechanism
111b:   sample dispensing probe
111c:   sample dispensing arm
111d:   horizontal movement mechanism
111e:   vertical movement mechanism
112:    detergent bottle
113:    cleaning tank (for sample dispensing mechanism)
115:    sample container
116:    sample rack
117:    sample transport mechanism
118:    controller
120:    reagent dispensing probe
121:    reagent syringe
122:    sample syringe
202:    cleaning nozzle
208:    cleaning liquid supply pump
210:    liquid level detector
215:    adjustment valve (electric current control)
216:    solenoid valve
217:    adjustment valve (manual)
218:    flow channel
219:    waste liquid tank
300:    cleaning liquid flow
301:    first height detection position
302:    second height detection position
501:    automatic analyzer control unit
502:    GUI
503:    dispensing arm control unit
504:    dispensing arm horizontal movement unit
505:    dispensing arm vertical movement unit
506:    probe cleaning control unit
507:    height detection and adjustment control unit
508:    normal cleaning mode/height detection and adjustment mode switching unit
509:    solenoid valve control unit
510:    cleaning liquid contact determination unit
511:    liquid flow detection height table
512:    adjustment valve control unit
513:    adjustment valve control table
701:    first height detection position
702:    second height detection position
703:    dispensing arm rotation center axis

**Claims**

1.  An automatic analyzer comprising:

a dispensing mechanism including a dispensing probe configured to dispense a sample or a reagent into a reaction container;

a cleaning nozzle configured to discharge a cleaning liquid to the dispensing probe; and

a control unit configured to control the dispensing mechanism, wherein

a height of the cleaning liquid discharged from the cleaning nozzle is detected at plural positions at which horizontal distances from the cleaning nozzle are different, so as to determine a discharging state of the cleaning liquid, and

at least one of the plural positions is farther from the cleaning nozzle than a cleaning position of the dispensing probe.

2. The automatic analyzer according to claim 1, wherein
among the plural positions, a position closest to the cleaning nozzle is a cleaning position of the dispensing probe.

3. The automatic analyzer according to claim 1, wherein

movement in a horizontal direction of the dispensing mechanism is only rotation around a rotation axis extending in a vertical direction,

the plural positions are two positions,

a position closer to the cleaning nozzle is a cleaning position of the dispensing probe, and

a position farther from the cleaning nozzle is a position obtained by rotating the dispensing probe from the cleaning position by a constant angle around the rotation axis.

4. The automatic analyzer according to claim 1, wherein

the plural positions are two positions, and

a distance in the horizontal direction between the two positions is equal to or greater than 1 mm.

5. The automatic analyzer according to claim 1, wherein

the dispensing mechanism includes a cleaning liquid detection unit, and

the control unit starts to lower the dispensing probe after starting to discharge the cleaning liquid, and determines a discharging state of the cleaning liquid by a height of the cleaning liquid detected by the cleaning liquid detection unit.

6. The automatic analyzer according to claim 1, wherein

the dispensing mechanism includes a cleaning liquid detection unit,

the control unit lowers the dispensing probe at the plural positions, and determines a discharging state of the cleaning liquid based on a height of the cleaning liquid detected by the cleaning liquid detection unit, and

a lowering speed of the dispensing probe when the discharging state of the cleaning liquid is determined is smaller than a lowering speed of the dispensing probe when the dispensing probe is cleaned.

FIG. 1

EP 4 350 358 A1

# FIG. 2

# FIG. 3

EP 4 350 358 A1

# FIG. 4

(a) FIRST (UPSTREAM SIDE) HEIGHT DETECTING POSITION

(b) SECOND (DOWNSTREAM SIDE) HEIGHT DETECTING POSITION

EP 4 350 358 A1

# FIG. 5

AUTOMATIC ANALYZER CONTROL UNIT — 501

GUI — 502

DISPENSING ARM CONTROL UNIT — 503

(LOW SPEED)

NORMAL CLEANING MODE/HEIGHT DETECTION AND REGULATION MODE SWITCHING UNIT — 508

(HIGH SPEED)

PROBE CLEANING CONTROL UNIT — 506

HEIGHT DETECTION/REGULATION CONTROL UNIT — 507

LIQUID FLOW DETECTING HEIGHT TABLE — 511

DISPENSING ARM HORIZONTAL MOVEMENT UNIT — 504

DISPENSING ARM VERTICAL MOVEMENT UNIT

SOLENOID VALVE CONTROL UNIT — 509

ADJUSTMENT VALVE CONTOROL UNIT

ADJUSTMENT VALVE CONTROL TABLE — 513

512

(HIGH SPEED/LOW SPEED)

LIQUID LEVEL DETECTOR — 210

CLEANING LIQUID CONTACT DETERMINATION UNIT — 510

505

111

111b

SOLENOID VALVE — 202

SOLENOID VALVE — 216

ADJUSTMENT VALVE — 215

EP 4 350 358 A1

# FIG. 6

START

S601 — MOVE TO FIRST HEIGHT DETECTING POSITION

S602 — LOWER PROBE

S603 — ACQUIRE SENSOR SIGNAL

S604 — IS SIGNAL EQUAL TO OR GREATER THAN THRESHOLD VALUE? — NO

YES

S605 — ACQUIRE PROBE LOWERING STOP DETECTION RESULT

S606 — LIFT PROBE

S607 — MOVE TO SECOND HEIGHT DETECTING POSITION

S608 — LOWER PROBE

S609 — ACQUIRE SENSOR SIGNAL

S610 — IS SIGNAL EQUAL TO OR GREATER THAN THRESHOLD VALUE? — NO

YES

S611 — ACQUIRE PROBE LOWERING STOP DETECTION RESULT

S612 — LIFT PROBE MOVE TO INITIAL POSITION

S613 — Z1−Z2<REFERENCE VALUE? — NO

YES

END

S614 — INCREASE OPENING DEGREE OF REGULATION VALVE

EP 4 350 358 A1

FIG. 7

## INTERNATIONAL SEARCH REPORT

| | International application No. |
|---|---|
| | **PCT/JP2022/019855** |

**A.    CLASSIFICATION OF SUBJECT MATTER**

***G01N 35/10***(2006.01)i
　　FI:    G01N35/10 F; G01N35/10 C

According to International Patent Classification (IPC) or to both national classification and IPC

**B.    FIELDS SEARCHED**

Minimum documentation searched (classification system followed by classification symbols)
　　G01N35/10

Documentation searched other than minimum documentation to the extent that such documents are included in the fields searched
　　Published examined utility model applications of Japan 1922-1996
　　Published unexamined utility model applications of Japan 1971-2022
　　Registered utility model specifications of Japan 1996-2022
　　Published registered utility model applications of Japan 1994-2022

Electronic data base consulted during the international search (name of data base and, where practicable, search terms used)

**C.    DOCUMENTS CONSIDERED TO BE RELEVANT**

| Category* | Citation of document, with indication, where appropriate, of the relevant passages | Relevant to claim No. |
|---|---|---|
| A | JP 2016-085103 A (TOSHIBA CORP) 19 May 2016 (2016-05-19)<br>　　paragraphs [0145]-[0160], fig. 13 | 1-6 |
| A | JP 2020-052002 A (JEOL LTD) 02 April 2020 (2020-04-02)<br>　　paragraphs [0101]-[0111], [0122]-[0132], fig. 11-12, 15-16 | 1-6 |
| A | JP 2020-160000 A (SYSMEX CORP) 01 October 2020 (2020-10-01)<br>　　paragraphs [0071], [0075], [0181]-[0196], fig. 17-20 | 1-6 |
| A | WO 2010/016506 A1 (HITACHI HIGH-TECHNOLOGIES CORPORATION) 11 February 2010 (2010-02-11)<br>　　specification, p. 10, line 17 to p. 11, line 19, fig. 7 | 1-6 |
| P, X | WO 2021/112120 A1 (HITACHI HIGH-TECH CORPORATION) 10 June 2021 (2021-06-10)<br>　　paragraphs [0056]-[0061], claims 6-9, fig. 10-11 | 1-3, 5-6 |
| P, X | WO 2021/117326 A1 (HITACHI HIGH-TECH CORPORATION) 17 June 2021 (2021-06-17)<br>　　paragraphs [0044]-[0048], claim 9 | 1-3, 5 |

☐ Further documents are listed in the continuation of Box C.　　　☑ See patent family annex.

| | | |
|---|---|---|
| * | Special categories of cited documents: | |
| "A" | document defining the general state of the art which is not considered to be of particular relevance | "T"　later document published after the international filing date or priority date and not in conflict with the application but cited to understand the principle or theory underlying the invention |
| "E" | earlier application or patent but published on or after the international filing date | "X"　document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y"　document of particular relevance; the claimed invention cannot be considered to involve an inventive step when the document is combined with one or more other such documents, such combination being obvious to a person skilled in the art |
| "O" | document referring to an oral disclosure, use, exhibition or other means | |
| "P" | document published prior to the international filing date but later than the priority date claimed | "&"　document member of the same patent family |

| Date of the actual completion of the international search | Date of mailing of the international search report |
|---|---|
| **06 July 2022** | **19 July 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

INTERNATIONAL SEARCH REPORT
Information on patent family members

International application No.

**PCT/JP2022/019855**

| Patent document cited in search report | | | Publication date (day/month/year) | Patent family member(s) | Publication date (day/month/year) |
|---|---|---|---|---|---|
| JP | 2016-085103 | A | 19 May 2016 | (Family: none) | |
| JP | 2020-052002 | A | 02 April 2020 | (Family: none) | |
| JP | 2020-160000 | A | 01 October 2020 | US 2020/0306804 A1 paragraphs [0101], [0106], [0230]-[0245], fig. 17-20 | |
| WO | 2010/016506 | A1 | 11 February 2010 | US 2011/0171069 A1 paragraphs [0047]-[0052], fig. 7 EP 2322941 A1 CN 102112882 A | |
| WO | 2021/112120 | A1 | 10 June 2021 | (Family: none) | |
| WO | 2021/117326 | A1 | 17 June 2021 | (Family: none) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2010016506 A